Europäisches Patentamt

(19) European Patent Office

Office européen des brevets

(11) Numéro de publication: **0 118 335 B1**

(12) **FASCICULE DE BREVET EUROPEEN**

(45) Date de publication du fascicule du brevet: 04.06.86

(21) Numéro de dépôt: 84400214.7

(22) Date de dépôt: 31.01.84

(51) Int. Cl.⁴: **B 60 G 15/12**

(54) Suspension oléopneumatique à amortissement total.

(30) Priorité: 02.03.83 FR 8303433

(43) Date de publication de la demande: 12.09.84 Bulletin 84/37

(45) Mention de la délivrance du brevet: 04.06.86 Bulletin 86/23

(84) Etats contractants désignés:
DE GB IT

(56) Documents cités:
FR - A - 1 543 415
FR - A - 2 243 373
FR - A - 2 408 071
GB - A - 2 000 251
US - A - 3 019 029
US - A - 4 334 600

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, Société dite:, 75, Avenue de la Grande-Armée, F-75761 Paris Cedex 16 (FR)**

(72) Inventeur: **Richard, Denis, 10, rue Henri Corvol, F-94600 Choisy-le-Roi (FR)**
Inventeur: **Perineau, Jean, 20, rue des Marronniers, F-94260 Fresnes (FR)**

(74) Mandataire: **Fabien, Henri, PEUGEOT SA. DAT / BPI 18, rue des Fauvelles, F-92250 La Garenne-Colombes (FR)**

# Description

L'invention concerne un perfectionnement à l'amortissement d'une suspension oléopneumatique à jambe télescopique pour roue directrice de véhicule. Les suspensions auxquelles s'applique l'invention sont celles qui comprennent un élément supérieur cylindrique articulé à la structure du véhicule, coulissant sur un élément inférieur de forme tubulaire support de roue, cet élément inférieur étant relié par un levier articulé à la structure du véhicule; et des moyens pour faire agir du liquide, préférentiellement de l'huile, sous pression entre les éléments.

Le coulissement de l'élément supérieur sur l'élément inférieur se fait sur deux paliers, un palier supérieur appartenant à l'élément inférieur et un palier inférieur appartenant à l'élément supérieur.

Un accumulateur oléopneumatique fixé à la structure du véhicule comporte une réserve de liquide sous pression reliée à la suspension par un alésage central de l'élément coulissant supérieur. Des moyens sont prévus pour la circulation du liquide pendant le coulissement.

On sait que les suspensions du genre ainsi défini sont généralement munies d'amortisseurs.

Le brevet FR-A-2408 071 décrit une suspension de véhicule du type ci-dessus avec des moyens d'amortissement situés à proximité du palier inférieur.

Lorsqu'une telle suspension comporte un amortisseur d'huile disposé à l'entrée de l'accumulateur oléopneumatique, le volume d'huile amortie est égal au volume d'huile entrant ou sortant de l'accumulateur, ce volume correspond au produit de la section extérieure de l'élément supérieur par le déplacement. Lorsque l'amortisseur est disposé périphériquement sur le support du palier inférieur, le volume d'huile amortie correspond au volume périphérique passant d'un côté à l'autre du palier inférieur autour de l'élément supérieur.

La suspension qui fait l'objet de l'invention est caractérisée par le fait que le support de palier inférieur comporte un amortisseur traversé par la totalité du liquide déplacé au cours d'un coulissement et dont le volume correspond au produit de la section intérieure de l'élément inférieur par le déplacement.

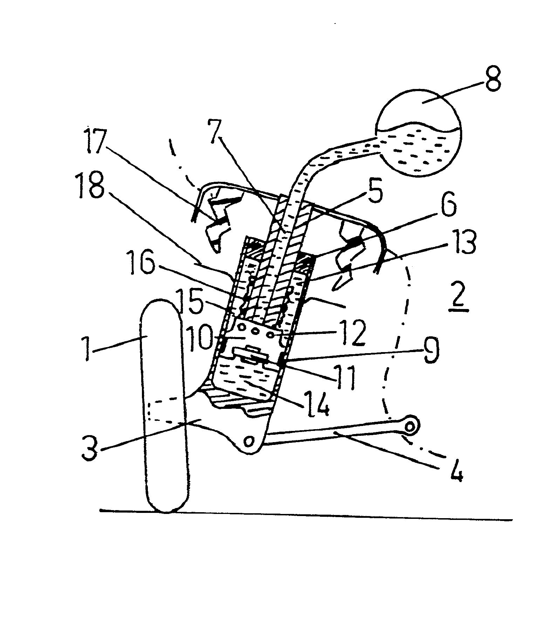

La figure unique représente une vue schématique selon l'invention. On voit sur la Fig. 1 une suspension reliant une roue directrice 1 d'un véhicule avec la structure 2. Cette suspension comprend un élément inférieur 3 support de roue, de forme tubulaire, relié à la structure par une barre articulée 4; et un élément supérieur 5 cylindrique articulé à la structure et coulissant sur l'élément inférieur 3.

L'élément inférieur 3 porte un palier supérieur 6 de manière étanche et admettant un coulissement étanche de l'élément supérieur 5.

L'élément supérieur comporte un alésage central 7 servant de conduit de liquide. Ce conduit relie le liquide de la suspension à un accumulateur oléopneumatique 8 fixé à la structure du véhicule. L'élément supérieur 5 comporte également un palier inférieur 9 coulissant sur l'élément inférieur 3.

Le palier inférieur 9 est monté sur un support de palier 10 qui comporte un amortisseur d'huile incorporé 11. L'amortisseur se compose d'orifices munis de clapets et de ressorts tarés n'autorisant le passage de l'huile qu'au-delà d'un seuil de pression.

Le support de palier 10 est muni d'orifices 12 permettant à l'huile de circuler librement de l'intérieur 7 de l'élément supérieur 5 vers la zone annulaire 13 entourant l'élément supérieur et située au-dessus du support de palier 10.

L'huile contenue dans le volume 14 situé au-dessous du support de palier 10 passe nécessairement, dans un sens ou dans l'autre, par l'amortisseur 11 avant de s'engager dans le volume 7 puis dans le volume 13 par les orifices 12.

On constate aisément que la pression du liquide, agissant par effet différentiel, tend à séparer les éléments inférieur et supérieur de la suspension.

Au cours d'un coulissement, la quantité d'huile admise ou rejetée de l'accumulateur 8 correspond à la variation de volume de l'élément supérieur, intérieur à l'élément inférieur, ou encore au produit de la section extérieure de l'élément supérieur par le déplacement.

Le volume d'huile amorti correspond au volume admis ou rejeté de l'accumulateur 8 auquel s'ajoute le volume qui transite entre les zones 14 et 13. Le support de palier 10 comporte au niveau de son raccordement avec l'élément supérieur 3 un épaulement 15 sur lequel repose un tube élastomère 16 qui sert de butée quand le support de palier 10 se rapproche du palier supérieur 6. Un deuxième élément élastomère 17 en forme d'anneau à plis circulaires sert de butée quand les deux paliers tendent à s'écarter, en s'écrasant sur une collerette 18 solidaire de l'élément inférieur. Les éléments élastomère 16 et 17 qui servent de butées protègent contre les chocs les paliers 6 et 9, le support de palier 10 et l'amortisseur 11.

On sait que les accumulateurs oléopneumatiques comportent une membrane qui devient poreuse quand elle est portée à une température élevée. Le dispositif décrit évite cet inconvénient puisque l'huile qui s'échauffe en passant par l'amortisseur reste éloignée de l'accumulateur.

En outre, le dispositif de l'invention fonctionne avec un amortissement plus efficace que le dispositif qui comprend un amortisseur à l'entrée de l'accumulateur oléopneumatique, ce qui permet de réduire les variations de pression d'amortissement et les pointes de pression dans l'accumulateur.

# Revendications

1. Suspension oléopneumatique à jambe télescopique pour roue directrice de véhicule, comprenant un élément supérieur cylindrique articulé à la structure du véhicule et coulissant sur un élément inférieur de forme tubulaire, support de roue; cet élément inférieur portant un palier supérieur (6) pour le coulissement, tandis que l'élément supérieur comporte un palier inférieur (9) et des moyens d'amortissement à proximité dudit palier inférieur; et un accumulateur oléopneumatique (8) fixé à la structure du véhicule et comportant une réserve de liquide, préférentiellement de l'huile, sous pression reliée à la suspension par un alésage central (7) de l'élément coulissant supérieur, caractérisée en ce que lesdits moyens d'amortissement (11) agissent sur la totalité du liquide déplacé pendant le coulissement.

2. Suspension oléopneumatique à jambe télescopique selon la revendication 1 dont le palier inférieur est monté sur un support de palier, caractérisée en ce que le support de palier inférieur (10) comporte un amortisseur (11) incorporé interposé entre le volume (14) d'huile situé en dessous du support de palier (10) et le volume (7) intérieur à l'élément supérieur (5).

3. Suspension oléopneumatique à jambe télescopique selon la revendication 1 dont le palier inférieur est monté sur un support de palier, caractérisée en ce que le support de palier inférieur (10) comporte des perçages (12) permettant la circulation de l'huile entre l'intérieur (7) et l'extérieur (13) de l'élément supérieur (5).

4. Suspension oléopneumatique à jambe télescopique selon la revendication 1 dont le palier inférieur est monté sur un support de palier, caractérisée en ce que le support de palier inférieur (10) comporte un épaulement (15) sur lequel prend appui un tube élastomère (16) entourant l'élément supérieur (5) et servant de butée dans le sens du rapprochement des deux paliers (6) et (9).

5. Suspension oléopneumatique à jambe télescopique selon la revendication 1, caractérisée en ce qu'elle comporte une collerette (18) rapportée extérieurement à l'élément tubulaire inférieur (3) et un anneau élastomère (17) entourant l'élément inférieur (3) et servant de butée, dans le sens de l'écartement des deux paliers (6) et (9), en s'écrasant sur la collerette (18).

## Claims

1. Oleopneumatic suspension having a telescopic strut for a steered wheel of a vehicle, comprising a cylindrical upper member articulated to the vehicle body and sliding on a lower member of tubular shape which carries a wheel; this lower member carrying an upper bearing (6) for the sliding action, whereas the upper member comprises a lower bearing (9) and damping means close to the said lower bearing, and an oleopneumatic accumulator (8) fixed to the vehicle structure and containing a reserve of liquid, preferably oil, which is pressurised and connected to the suspension via a central bore (2) of the upper sliding member, characterised in that the said damping means (11) act on the totality of the liquid displaced during the sliding action.

2. Oleopneumatic suspension having a telescopic strut according to claim 1, of which the lower bearing is mounted on a bearing support, characterised in that the lower bearing support (10) comprises an incorporated shock-absorber (11) positioned between the volume of oil (14) situated below the bearing support (10) and the internal volume (7) of the upper member (5).

3. Oleopneumatic suspension having a telescopic strut according to claim 1, of which the lower bearing is mounted on a bearing support, characterised in that the lower bearing support (10) comprises apertures (12) permitting the circulation of oil between the interior (7) and the exterior (13) of the upper member (5).

4. Oleopneumatic suspension comprising a telescopic strut according to claim 1, of which the lower bearing is mounted on a bearing support, characterised in that the lower bearing support (10) comprises a shoulder (15) on which bears an elastomeric tube (16) surrounding the upper member (5) and acting as a stop in the direction of mutual approach of the two bearings (6) and (9).

5. Oleopneumatic suspension comprising a telescopic strut according to claim 4, characterised in that it comprises a flange (18) attached externally to the lower tubular member (3) and an elastomeric ring (17) surrounding the lower member (3) and acting as a stop, in the direction of the separation between the two bearings (6) and (9) whilst being compressed on the flange (18).

## Patentansprüche

1. Hydropneumatische Aufhängung mit Teleskopfederbein für gelenkte Fahrzeugräder, mit einem oberen zylindrischen Element, das an dem Fahrzeugaufbau angelenkt ist und auf einem unteren, rohrförmigen, das Rad tragendem Element gleitend, wobei das untere Element ein oberes Gleitlager (6) trägt, während das obere Element ein unteres Lager (9) und in der Nähe des unteren Lagers Dämpfungsmittel aufweist und mit einem Druckspeicher (8), der am Fahrzeugaufbau befestigt ist und einen Behälter für eine Flüssigkeit, vorzugsweise Öl, aufweist, wobei die druckbeaufschlagte Flüssigkeit mit der Aufhängung über eine zentrale Öffnung (7) des oberen Gleitelements verbunden ist, dadurch gekennzeichnet, dass die Dämpfungsmittel (11) auf die gesamte, während des Gleitens bewegte Flüssigkeit einwirken.

2. Aufhängung nach Anspruch 1, deren unteres Lager auf einem Lagerträger angebracht ist, dadurch gekennzeichnet, dass der Träger (10) des unteren Lagers einen eingebauten Dämpfer (11) aufweist, der zwischen dem unter dem Träger (10) des Lagers gelegenem Ölvolumen (14) und dem Innenvolumen (7) des oberen Elements (5) angeordnet ist.

3. Aufhängung nach Anspruch 1, dessen unteres Lager auf einem Lagerträger angeordnet ist, dadurch gekennzeichnet, dass der Träger des unteren Lagers (10) Bohrungen (12) aufweist, die eine Zirkulation des Öls zwischen dem Inneren (7) und dem Äusseren (13) des oberen Elements (5) ermöglichen.

4. Aufhängung nach Anspruch 1, deren unteres Lager auf einem Lagerträger angebracht ist, dadurch gekennzeichnet, dass der Träger des unteren Lagers (10) eine Stufe (14) aufweist, auf der ein aus einem Elastomer bestehendes Rohr (16) aufliegt, das das obere Element (5) umhüllt und in Annäherungsrichtung der beiden Lager (6) und (9) als Anschlag dient.

5. Aufhängung nach Anspruch 1, gekennzeichnet durch einen Kragen (18), der aussen an dem unteren rohrförmigem Element (3) angebracht ist und durch einen aus einem Elastomer bestehenden Ring (17), der das untere Element (3) umhüllt und in Richtung einer Entfernung der beiden Lager (6) und (9) voneinander als Anschlag dient, in dem er auf dem Kragen (18) gestaucht wird.